# EUROPÄISCHE PATENTSCHRIFT

(11) **EP 1 083 543 B1**
(45) Veröffentlichungstag und Bekanntmachung des Hinweises auf die Patenterteilung: **12.09.2007**
(21) Anmeldenummer: 00117264.2
(22) Anmeldetag: 16.08.2000
(51) Int. Cl.: G10L 15/20, G10L 21/02

(54) **Verfahren zum Betrieb einer Mehrfachmikrofonanordnung in einem Kraftfahrzeug zur sprachgesteuerten Befehlseingabe**
Method for operating a multiple microphones agencement in a motor vehicle for spoken command input
Procédé pour l'opération d'un agencement à microphones multiples dans un véhicule à moteur pour l'entrée de commandes vocales

(30) Priorität: 08.09.1999 DE 19942868
(43) Veröffentlichungstag der Anmeldung: 14.03.2001
(60) Teilanmeldung: 06019734.0
(73) Patentinhaber: Volkswagen Aktiengesellschaft, 38436 Wolfsburg (DE)
(72) Erfinder: Tontch, Kilian, Dipl.-Ing., 38440 Wolfsburg (DE); Schaaf, Klaus, Dr., 38116 Braunschweig (DE); Wengelnik, Heino, Dr., 38440 Wolfsburg (DE)

(56) Entgegenhaltungen:
- WO-A-99/49698
- US-A- 5 539 859
- US-A- 5 828 997
- GIULIANI D ET AL: "TALKER LOCALIZATION AND SPEECH RECOGNITION USING A MICROPHONE ARRAY AND A CROSS-POWERSPECTRUM PHASE ANALYSIS" ICSLP 94: 1994 INTERNATIONAL CONFERENCE ON SPOKEN LANGUAGE PROCESSING. YOKOHAMA, JAPAN, SEPT. 18 - 22, 1994, INTERNATIONAL CONFERENCE ON SPOKEN LANGUAGE PROCESSING. (ICSLP), YOKOHAMA: ASJ, JP, Bd. 3, 18. September 1994 (1994-09-18), Seiten 1243-1246, XP000855485
- GRENIER Y: "A MICROPHONE ARRAY FOR CAR ENVIRONMENTS" SPEECH PROCESSING 1. SAN FRANCISCO, MAR. 23 - 26, 1992, PROCEEDINGS OF THE INTERNATIONAL CONFERENCE ON ACOUSTICS, SPEECH AND SIGNAL PROCESSING (ICASSP), NEW YORK, IEEE, US, Bd. 1 CONF. 17, 23. März 1992 (1992-03-23), Seiten 305-308, XP000341144 ISBN: 0-7803-0532-9

## Beschreibung

Die Erfindung betrifft ein Verfahren zum Betrieb einer Mehrfachmikrofonanordnung in einem Kraftfahrzeug, bei welchem die Einzelsignale der Einzelmikrofone erfaßt und elektronisch nachbearbeitet werden, sowie eine Mehrfachmikrofonanordnung selbst, gemäß Oberbegriff der Patentansprüche 1 und 5.

Die Plazierung von Mikrofonen im Kraftfahrzeug kann mehrere Aufgaben haben. Zum einen sind für den Betrieb von Kommunikationssystemen, wie Bordtelefon und dgl. mehr, Mikrofone notwendig. Überdies gibt es jedoch auch sprachunterstützte Eingabesysteme, mit denen Schalt- oder Betätigungsbefehle sprachgesteuert, also ohne Handhabung von Betätigungselementen ausgelöst werden können. In größeren Fahrzeugen, wie bspw. in Bussen, dienen Mikrofonanordnungen zur Unterstützung von Kommunikation innerhalb des Fahrzeuges.

Weiterhin sind neuere Anwendungen möglich, bei denen über Mikrofone Schall innerhalb des Fahrzeuges erfaßt wird und elektronisch in der Form verarbeitet wird, daß daraus Gegenbeschallungssignale zur destruktiven Interferenz von Geräuschen innerhalb des Fahrzeuges eingesetzt werden.

Die WO 99/49698 betrifft ein Verfahren sowie eine Einrichtung zum Betrieb einer Mikrofonanordnung, insbesondere bei einem Kraftfahrzeug. Dabei ist der zentrale Punkt sowohl in verfahrensgemäßer als auch in einrichtungsgemäßer Hinsicht die Festlegung eines virtuellen optimierten Mikrofonortes.

Die Druckschrift Giuliani, D; Omologo, M.; Svaizer, P.; "Talker Localization and Speech Recognition using a Microphone Array and a Cross-Powerspectrum Phase Analysis"; ICSLP 94; Yokohama; Japan; Sept. 18 - 22; 1994; XP000855485 beschreibt ein Ermittlungssystem mit einer auf vier allseitig gerichteten Mikrofonen basierenden Anordnung, welche eingesetzt wird, um eine strahlenförmige Version der originalen akustischen Nachricht zu reproduzieren, welche in einer verrauschten und widerhallenden Umgebung ermittelt wird.

So ist der JP 7 176 178 eine Mehrfachmikrofonanordnung in Kraftfahrzeugen bekannt, welche zur Erfassung der Stimmen aller Mitfahrer dient. Dabei wird erreicht, daß beispielsweise bei in Betrieb genommener Audioanlage eine Leise- oder Stummschaltung der Musik erfolgt, immer dann, wenn einer der Fahrzeuginsassen spricht.

Aus der EP 0 721 178 A2 ist ein Multikanalkommunikationssystem bekannt, welches zur Unterdrückung von Echos und Störgeräuschen bei der Kommunikation bzw. während der Kommunikation dient.

Aus der US 3 784 747 ist eine Anordnung bekannt, bei welcher die Unterdrückung von Störsignalen bei der Verwendung von Mehrfachmikrofonanordnungen als solches im Vordergrund steht. Hierbei werden Rückkopplungseffekte und dgl. behandelt. Ein weiteres Geräuschunterdrückungsverfahren ist aus der EP 0 729 288 A2 bekannt.

Den letzten drei vorab beschriebenen Verfahren und Anordnungen ist jedoch eine Problematik grundlegend. Die Plazierung von Mikrofonen fixiert in allen diesen Fällen den Ort der Schallaufnahme innerhalb des Kraftfahrzeuges. Befindet sich nun eine Sprachquelle, d. h. ein Fahrzeuginsasse in entsprechender Entfernung zum besagten Mikrofon, so nimmt dasselbe um noch einigermaßen sensitiv Sprache aufnehmen zu können, natürlich auch Fahrgeräusche oder Geräusche innerhalb des Fahrzeuges auf. Außerdem erhöhen sich Rückkopplungseffekte naturgemäß bei einer solchen Situation.

Aus der EP 0 660 639 A1 ist daher eine mechanische Ausrichtbarkeit eines Einzelmikrofones in einem Kraftfahrzeug angegeben. Das Mikrofon ist dabei in einer Art Kugelgelenk angeordnet, welches in verschiedene Richtungen drehbar sein soll, um eine gewisse Richtcharakteristik gewährleisten zu können. Jedoch auch hierbei ergibt sich nachteiligerweise, daß ein so installiertes Einzelmikrofon zwar in geringfügigem Maße gerichtet werden kann, aber die Schallwege zu unterschiedlichen Schallquellen durchaus unterschiedlich groß sein können. Es ist damit auch keine gleichbleibende Qualität der Sprachaufnahme möglich.

Vor dem Hintergrund sprachgenerierter Eingaben bei Kraftfahrzeugen kommt jedoch der Qualität der ankommenden Sprachsignale eine wesentliche Bedeutung zu. Eine schlechte Spracherkennung führt somit zu einer fehlerbehafteten Betätigung der sprachgesteuerten Funktionen, was im übrigen auch die Fahrsicherheit beeinträchtigen kann. Dies insbesondere deshalb, weil Fehlfunktionen den Fahrzeugführer immer deutlich vom Verkehrsgeschehen ablenken.

Der Erfindung liegt somit die Aufgabe zugrunde, sowohl ein Verfahren zum Betrieb einer Mehrfachmikrofonanordnung, sowie auch eine Mehrfachmikrofonanordnung selbst dahingehend zu verbessern, daß Sprachbefehle immer optimal aufgenommen werden können.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen des erfindungsgemäßen Verfahrens sind in den nachfolgenden abhängigen Ansprüchen 2-4 angegeben.

Hinsichtlich einer Mehrfachmikrofonanordnung selbst ist die gestellte Aufgabe erfindungsgemäß durch die kennzeichnenden Merkmale des Patentanspruches 5 gelöst. Weitere vorteilhafte Ausgestaltungen hierzu sind in den übrigen Ansprüchen angegeben.

Das erfindungsgemäße Verfahren besteht hierbei darin, daß zur präziseren Ansteuerung einer sprachgesteuerten Eingabe von Steuer- oder Betätigungsbefehlen, die Signale der Einzelmikrofone simultan und im Zeitbezug zueinander erfaßt und bspw. fouriertransformiert werden, und daß aus den daraus gewonnenen bzw. gewinnbaren Parametern und dem Kohärenzbezug der Einzelsignale selbst, die Sprachsignale vor Ansteuerung der Befehlseingabe auf Plausibilität geprüft werden.

Wesentlich ist hierbei, daß mehrere Mikrofone verwendet werden. Diese sind an verschiedenen Orten im Fahrzeug weitestgehend asymmetrisch plaziert. Durch diese asymmetrische Verteilung ist es unwahrscheinlich, daß die Sprachquelle dann zu irgendeinem Zeitpunkt gleich weit zu allen Einzelmikrofonen entfernt ist. Wichtig ist hierbei jedoch, daß die Signale aller Einzelmikrofone ausgewertet werden; also auch solche, die näher oder weiter entfernt von der Sprachquelle plaziert sind. Dadurch können die Einzelmikrofonsignale simultan und in einem Zeitbezug zueinander erfaßt werden. Durch unterschiedliche Entfernungen zum Mikrofon ergeben sich natürlich auch unterschiedliche Laufzeiten. Schon durch die besagte Laufzeiterfassung der einzelnen Mikrofonsignale ist es möglich, die Sprachquelle als solches räumlich zu orten. Die erfaßten Einzelsignale der Mikrofone werden dabei auch jeweils separat voneinander analysiert d.h. bspw. fouriertransformiert.

Im Falle einer Signalanalyse mit Fouriertransformation findet diese dabei vom Frequenzraum in den Phasenraum statt. Aus den Signalen, und den daraus gewonnenen Parametern sowie dem Kohärenzbezug der Einzelsignale zueinander, können somit die jeweiligen Sprachquellen, die ja unterschiedlich sein können, jeweils geortet werden. Die Fülle der Parameter als solche eröffnet die Möglichkeit vor Ansteuerung der Befehlseingabe eine Plausibilitätsprüfung des ankommenden Sprachbefehles vorzunehmen.

Dabei wird zusätzlich aus den Signalparametern und dem Kohärenzbezug eine Richtcharakteristik ermittelt, mit Hilfe welcher der virtuelle Mikrofonort der tatsächlichen Sprachquelle nachgeführt wird. Durch eine solche Ortung ist die Mikrofonsignalauswertung als solches optimierbar, wodurch die Sprachbefehle als solches auch besser qualifiziert werden können.

Dabei werden aus Abprüfung der Plausibilität und virtueller Lokalisierung der Sprachquelle übrige, delokale Geräuschquellen durch Subtraktion eliminiert. Dabei kommt die Ermittlung des virtuellen Mikrofonortes zur Wirkung. Die ankommende Sprachqualität ist dahingehend verbesserbar, daß auch die Nebengeräuschquellen qualifiziert erkannt werden können. Dies führt zu einer weiteren Steigerung der Qualität ankommender, auswertbarer Sprachbefehle.

Weiterhin ist erfindungsgemäß vorgeschlagen, daß die Ermittlung der Richtcharakteristik und das Nachführen des virtuellen Mikrofonortes noch während eines einzelnen Sprechvorganges erfolgt. Eine solche Realisierung ist mit geeigneten elektronischen Mitteln möglich, die eine entsprechend schnelle Auswertbarkeit liefern.

Eine entsprechende Mehrfachmikrofonanordnung in erfindungsgemäßer Weise ist in den kennzeichnenden Merkmalen des Patentanspruches 5 angegeben. Auch hierbei steht im Vordergrund eine Mehrfachanordnung einzelner separater und autarker Mikrofone innerhalb des Fahrzeuges, bei welcher digitale Speichermittel zur adaptiven Stimmerkennung und Stimmcharakteristikaerkennung vorgesehen sind. Eine entsprechende Einzelsignalbewertung der Mikrofone erfolgt dabei in einer digitalen Signalprozessoreinheit, in welcher zunächst die ankommenden einzelnen Mikrofonsignale jeweils separat analysiert bzw. fouriertransformiert werden. Weiterhin werden analoge Größen der Einzelmikrofonsignale innerhalb dieser DSP (Digitaler Signal Prozessor) digitalisiert. Der so für jedes Einzelmikrofon vorliegende Parametersatz, der jedoch auf ein und dieselbe Sprachquelle zurückgeht, können nun Laufzeit-, und Kohärenzbestimmung, zusätzlich zu einer Ortung des virtuellen Mikrofonortes, also des Ortes der Sprachquelle vorgenommen werden. Damit kann eine entsprechende virtuelle Richtung oder Nachführung bzw. eine daraufhin gerichtete Richtcharakteristik der gesamten Mehrfachmikrofonanordnung realisiert werden. Wichtig ist hierbei die simultane Bearbeitung aller einzelnen Signale, um eine gewisse Verarbeitungsschnelligkeit ermöglichen zu können. Hernach erfolgt eine digitale Nachbearbeitung und die entsprechende selektive Erkennung von darin enthaltenen Sprachbefehlen, die die Eingabeeinheit kennt. Darauf aufbauend werden die erkannten Sprachbefehle dann in einer entsprechenden Einheit generiert und somit elektrische Stellsignale, die aus den erkannten Sprachbefehlen ermittelt werden, den entsprechenden Stellorganen zugeführt.

In Anwendungen kann daran gedacht werden, Audio- Informations- und Kommunikationssysteme auf diese Weise zu steuern, aber auch fahrzeuginterne Einrichtungen, wie Navigationssystem, Klimaanlage, Beheizungssystem, Lichtanlage sowie ggf. auch Sicherheitseinrichtungen und auch Betriebszustände des Fahrzeuges. Bei den letztgenannten Einwirkungsmöglichkeiten handelt es sich um Einwirkungen auf das Betriebsverhalten des Fahrzeuges selbst. Hierbei ergibt sich selbstredend eine hohe Anforderung an die sichere Auswertung der Sprachbefehle, da sie ansonsten zu Fehlfunktionen führen können, die die Sicherheit des Fahrzeuges im Betrieb dramatisch beeinträchtigen können.

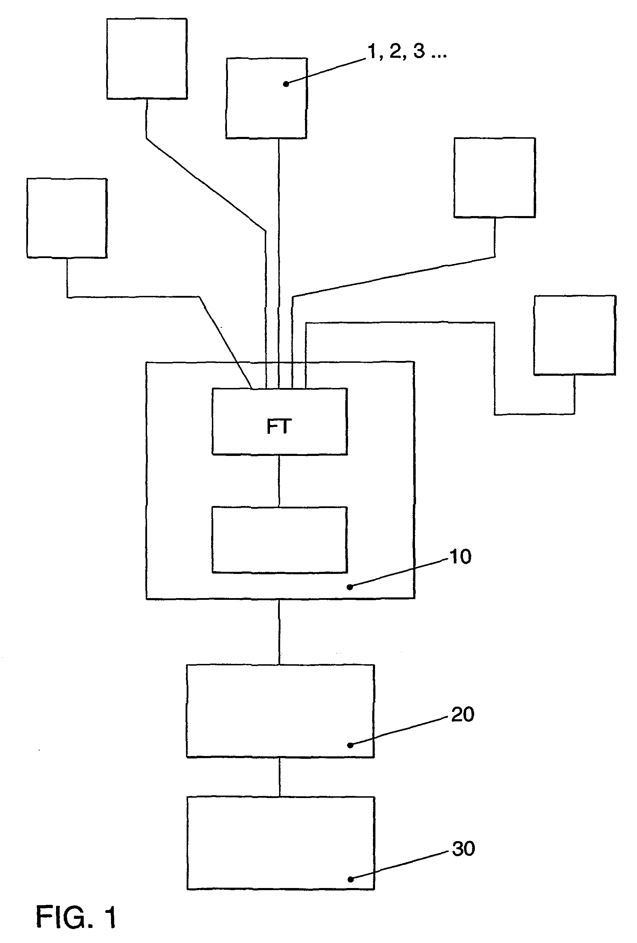

Die Erfindung ist in der Zeichnung dargestellt und nachfolgend näher beschrieben.

Die Abbildung zeigt eine schematische Darstellung im Hinblick auf die Funktionsweise des erfindungsgemäßen Verfahrens sowie der Mehrfachmikrofonanordnung selbst. Innerhalb des Fahrzeuges sind mehrere Mikrofone 1, 2, 3, ...räumlich verteilt an verschiedenen Orten angeordnet. Die räumlich verteilte Anordnung erfolgt dabei in geeigneter Weise so, daß sich keine planaren oder linearen Mikrofonarrays ausbilden. Vielmehr ist eine 3 dimensionale Verteilung der Mikrofone notwendig. Dies bedingt dann eine entsprechende Verteilung der einzelnen Mikrofone innerhalb der Fahrgastzelle insgesamt. Jedes der Mikrofone ist dabei signaltechnisch mit der digitalen Signalprozessoreinheit DSP 10 verbunden. Innerhalb der besagten digitalen Signalprozessoreinheit findet eine Sprachsignalanalyse statt zu welcher auch eine Fouriertransformation der einkommenden Einzelmikrofonsignale jeweils separat voneinander vorgenommen werden kann. Die Bildung eines Kohärenzbezuges aus der simultanen Bearbeitung aller Einzelmikrofonsignale gestattet zum ersten eine Signallaufmessung und die Inbezugsetzung aller Signale zueinander, so daß eine Ortung des virtuellen Mikrofonortes, d. h. der Ort der Sprachquelle möglich ist.

So entsteht zu jedem Einzelmikrofonsignal ein jeweils unabhängiger Satz von Parametern. Diese Parameter werden in der digitalen Signalprozessoreinheit DSP dahingehend ausgewertet, daß eine Ortung des virtuellen Mikrofonortes, also des Ortes der Sprachquelle und eine darauf abgestellte Richtcharakteristik virtuell ermittelbar ist. Diese Richtcharakteristik ist dabei darauf abgezielt, das Spracheingabesignal für die sprachgesteuerte Befehlseingabe in optimaler Weise erkennen zu können. Mit Hilfe der so ermittelten Richtcharakteristik ist selbst bei Variation des Ortes der Sprachquelle ein optimales Spracheingabesignal gewinnbar. Das heißt, der virtuelle Mikrofonort kann somit simultan, d. h. noch während des Sprechvorgangs so optimiert nachgeführt werden, daß eine optimale Erkennung der sprachgenerierten Befehlseingabe möglich ist.

In einer digitalen Nachbearbeitung 20 der Spracherkennung erfolgt somit eine Prüfung auf Plausibilität. Hier werden die aus den Einzelmikrofonsignalen und der daraus bestimmten Richtcharakteristik gewonnenen Sprachinformationen noch einmal selektiv bewertet und auf Plausibilität geprüft.

Damit ist realisiert, daß die simultane Verarbeitung aller Einzelmikrofonsignale mit diesem digitalen Signalprozessorsystem zu einem resultierenden Gesamtsignal führt. Dieses resultierende Gesamtsignal ist es dann, welches in der Spracherkennung ankommt und die Plausibilitätsprüfung auf die Verfügbarkeit entsprechender Befehle hin auch durchgeführt werden kann.

Das gesamte System ist somit und so zu sagen adaptiv, womit gemeint ist, daß die Bewegungen der Sprachquelle, d. h. beispielsweise des Kopfes des Sprechers, zeitsynchron detektiert werden. Mit dieser Kenntnis wird der Fokus der Mikrofongruppe adaptiv auf den Ort der Schallentstehung ausgerichtet und nachgeführt. Zu diesem einen, resultierenden Gesamtsignal hinzu kommend, erfolgt dann die Spacherkennung und die entsprechende Auswahl eines der verfügbaren Sprachbefehle. Dieser Sprachbefehl wird sodann einer Spacheingabeeinheit 30 zugeführt, in welchem die besagten dazugehörigen Stellsignale generiert werden. Mit Hilfe dieser generierten Stellsignale werden dann aus den erkannten Sprachbefehlen die entsprechenden Geräte und Systeme in entsprechender Weise angesteuert.

Insgesamt ergibt sich somit, daß zwei untergeordnete Verfahrensweisen hierbei das gesamte erfindungsgemäße Verfahren ergeben. Zum einen wird zunächst eine Mikrofonsignalauswertung aller Einzelmikrofonsignale durchgeführt, woraus zeitsynchron eine Lokalisierung des virtuellen Mikrofonortes ermittelt wird. Mit Hilfe dieser Ermittlung werden nun die ankommenden Signale dahingehend optimiert, daß sich ein resultierendes Gesamtsignal in optimierter Weise ergibt. Vor Ansteuerung der Befehlseingabe erfolgt in einem weiteren Verfahrensschritt eine Prüfung auf Plausibilität.

Insgesamt ist das System so sicher ausgelegt, daß auch betriebsbezogene Einstellungen über sprachgenerierte Befehlseingaben zukünftig möglich sind, da das Verfahren ein optimales Maß an der Erkennung tatsächlich "gemeinter" Sprachbefehle durchstellen kann. Dies betrifft selbst solche, die das Fahrverhalten im Betrieb des Fahrzeuges beeinflussen, und somit an die Zuverlässigkeit und Genauigkeit der gesamten Spracherkennung hohe Anforderungen stellt. Darüber hinaus kann das System auch adaptiv angelegt sein, in dem Sinne, daß gewisse "stimmbezogenen" Parameter, die personenindividuell sind erkannt werden können, bspw. durch Mustervergleich. Dadurch kann das Spracheingabesystem selbsttätig Personen mit ihren Sprachspezifika erkennen, womit sich das System selbsttätig auf verschiedene Personen, bzw. verschiedene Fahrzeugführer einstellen. Hierzu müssen zu bereits beschriebenen elektronischen Komponenten Speicherelemente hinzukommen, mit deren Hilfe Sprachmuster bzw. Sprachspezifika abgespeichert, bzw. adaptiv abgespeichert werden können.

## Patentansprüche

1. Verfahren zum Betrieb einer Mehrfachmikrofonanordnung für ein Kraftfahrzeug, bei welchem die Einzelsignale der Einzelmikrofone erfaßt und elektronisch nachbearbeitet werden, wobei zur präzisen Ansteuerung einer sprachgesteuerten Befehlseingabe von Steuer- oder Betätigungsbefehlen, oder zum präzisen Betrieb einer Telefonanlage die Signale der Einzelmikrofone simultan und in Zeitbezug zueinander erfaßt und analysiert werden, und wobei aus den daraus gewonnenen Parametern und dem Kohärenzbezug der Einzelsignale die Sprachsignale vor Ansteuerung der Befehlseingabe auf Plausibilität geprüft werden, wobei zusätzlich aus den Signalparametern und dem Kohärenzbezug eine Ortung einer Sprachquelle durchgeführt wird, mit deren Hilfe die Richtung der auszuformenden Richtkeule bestimmt wird, **dadurch** gekenntzeichnet, dass aus Abprüfen der Plausibilität und virtueller Lokalisierung der Sprachquelle übrige delokale Geräuschquellen durch destruktive Interferenz minimiert werden.

2. Verfahren nach Anspruch 1, **dadurch gekennzeichnet, dass** zur Sprachsignalanalyse die Signale der Einzelmikrofone zunächst durch A/D-Wandlung digitalisiert und dann fouriertransformiert werden.

3. Verfahren nach Anspruch 1 oder 2, **dadurch gekennzeichnet, dass** die Ermittlung der Richtcharakteristik und das Nachführen des virtuellen Mikrofonortes noch während eines einzelnen Sprechvorganges erfolgt.

4. Verfahren nach einem der vorhergehenden Ansprüche, **dadurch gekennzeichnet, dass** die Sprachsignale auch hinsichtlich erfaßbarer Stimmspezifika analysiert und die daraus ermittelbaren Parameter adaptiv abgespeichert werden und daraus eine individuelle Stimmerkennung von Personen durch Mustervergleich möglich ist.

5. Mehrfachmikrofonanordnung für ein Kraftfahrzeug, welche derart ausgestaltet ist, dass die Einzelsignale der Einzelmikrofone erfaßt und elektronisch nachbearbeitet werden, dass zur präzisen Ansteuerung einer sprachgesteuerten Befehlseingabe von Steuer- oder Betätigungsbefehlen oder zum präzisen Betrieb einer Telefonanlage die Signale der Einzelmikrofone simultan und in Zeitbezug zueinander erfaßt und analysiert werden, und dass aus den daraus gewonnenen Parametern und dem Kohärenzbezug der Einzelsignale die Sprachsignale vor Ansteuerung der Befehlseingabe auf Plausibilität geprüft werden, wobei zusätzlich aus den Signalparametern und dem Kohärenzbezug eine Ortung einer Sprachquelle durchgeführt wird, mit deren Hilfe die Richtung der auszuformenden Richtkeule bestimmt wird, **dadurch gekennzeichnet, dass** die Mehrfachmikrofonanordnung zusätzlich derart ausgestaltet ist, dass aus Abprüfen der Plausibilität und virtueller Lokalisierung der Sprachquelle übrige delokale Geräuschquellen durch destruktive Interferenz minimiert werden.

6. Mehrfachmikrofonanordnung nach Anspruch 5, **dadurch gekennzeichnet, dass** die Mehrfachmikrofonanordnung derart ausgestaltet ist, dass zur Sprachsignalanalyse die Signale der Einzelmikrofone zunächst durch A/D-Wandlung digitalisiert und dann fouriertransformiert werden.

7. Mehrfachmikrofonanordnung nach Anspruch 5 oder 6, **dadurch gekennzeichnet, dass** die Mehrfachmikrofonanordnung derart ausgestaltet ist, dass die Ermittlung der Richtcharakteristik und das Nachführen des virtuellen Mikrofonortes noch während eines einzelnen Sprechvorganges erfolgt.

8. Mehrfachmikrofonanordnung nach einem der Ansprüche 5-7, **dadurch gekennzeichnet, dass** die Mehrfachmikrofonanordnung derart ausgestaltet ist, dass die Sprachsignale auch hinsichtlich erfaßbarer Stimmspezifika analysiert und die daraus ermittelbaren Parameter adaptiv abgespeichert werden und daraus eine individuelle Stimmerkennung von Personen durch Mustervergleich möglich ist.

## Claims

1. Method for operating a multiple microphone arrangement for a motor vehicle, in which the single signals from the single microphones are detected and electronically post-processed, where precise actuation of voice-controlled command input of control or operating commands, or precise operation of a telephone installation, involves the signals from the single microphones being detected and analysed simultaneously and with a time reference to one another, and where the parameters obtained therefrom and the coherency reference for the single signals are used to check the voice signals for plausibility before the command input is actuated, the signal parameters and the coherency reference additionally being used to locate a voice source and said location being used to determine the direction of the directional lobe to be formed, **characterized in that** checking the plausibility and virtual location of the voice source minimizes other delocal noise sources through destructive interference.

2. Method according to Claim 1, **characterized in that** voice signal analysis involves the signals from the single microphones being first of all digitized by means of A/D conversion and then subjected to Fourier transformation.

3. Method according to Claim 1 or 2, **characterized in that** the directional characteristic is ascertained and the virtual microphone location is tracked actually during an individual speaking process.

4. Method according to one of the preceding claims, **characterized in that** the voice signals are also analysed in terms of detectable voice specifics, and the parameters which can be ascertained therefrom are stored adaptively, and this allows individual voice recognition for people through pattern comparison.

5. Multiple microphone arrangement for a motor vehicle which is in a form such that the single signals from the single microphones are detected and electronically post-processed, that precise actuation of voice-controlled command input of control or operating commands or precise operation of a telephone installation involves the signals from the single microphones being detected and analysed simultaneously and with a time reference to one another, and that the parameters obtained therefrom and the coherency reference for the single signals are used to check the voice signals for plausibility before the command input is actuated, the signal parameters and the coherency reference additionally being used to locate a voice source, said location being used to determine the direction of the directional lobe to be formed, **characterized in that** the multiple microphone arrangement is additionally in a form such that checking the plausibility and virtual location of the voice source minimizes other delocal noise sources through destructive interference.

6. Multiple microphone arrangement according to Claim 5, **characterized in that** the multiple microphone arrangement is in a form such that voice signal analysis involves the signals from the single microphones being first of all digitized by means of A/D conversion and then subjected to Fourier transformation.

7. Multiple microphone arrangement according to Claim 5 or 6, **characterized in that** the multiple microphone arrangement is in a form such that the directional characteristic is ascertained, and the virtual microphone location is tracked actually during an individual speaking process.

8. Multiple microphone arrangement according to one of Claims 5-7, **characterized in that** the multiple microphone arrangement is in a form such that the voice signals are also analysed in terms of detectable voice specifics, and the parameters which can be ascertained therefrom are stored adaptively, and this allows individual voice recognition for people through pattern comparison.

## Revendications

1. Procédé d'utilisation d'un arrangement à microphones multiples pour un véhicule automobile, avec lequel les signaux individuel des microphones individuel sont acquis et soumis à un traitement ultérieur électronique, les signaux des microphones individuels étant acquis et analysés simultanément et selon une relation temporelle entre eux en vue d'une command précise d'une saisie d'instruction commandée par la parole d'instructions de commande ou d'actionnement ou pour l'utilisation précise d'un équipement téléphonique, et un contrôle de plausibilité étant effectué à partir des paramètres ainsi obtenus et de la relation de cohérence des signaux individuels des signaux vocaux avant de commander la saisie d'instruction, une localisation d'une source de parole étant en plus réalisée à partir des paramètres des signaux et de la relation de cohérence, à l'aide de laquelle est déterminée la direction du lobe directionnel à former, **caractérisé en ce que** les autres sources de bruit délocalisées sont réduites par des interférences destructrices à partir du contrôle de la plausibilité et de la localisation, virtuelle de la source de parole.

2. Procédé selon la revendication 1, **caractérisé en ce que** pour l'analyse du signal vocal, les signaux des microphones individuels sont tout d'abord numérisés par une conversion A/N et subissent ensuite une transformation de Fourier.

3. Procédé selon la revendication 1 ou 2, **caractérisé en ce que** la détermination de la caractéristique directionnelle et le suivi du lieu virtuel du microphone s'effectuent encore pendant une élocution individuelle.

4. Procédé selon l'une des revendications précédentes, **caractérisé en ce que** les signaux vocaux sont également analysés pour y déceler les spécificités détectables de la parole et les paramètres qui peuvent être déterminés à partir de ceux-ci sont mémorisés de manière adaptative et une reconnaissance vocale individuelle des personnes par comparaison de modèles est possible à partir de cela.

5. Arrangement à microphones multiples pour un véhicule automobile, lequel est configuré de telle sorte que les signaux individuels des microphones individuels sont acquis et soumis à un traitement ultérieur électronique, que les signaux des microphones individuels sont acquis et analysés simultanément et selon une relation temporelle entre eux en vue d'une commande précise d'une saisie d'instruction commandé par la parole d'instructions de commande ou d'actionnement ou pour l'utilisation précise d'un équipement téléphonique, est qu'un contrôle de plausibilité est effectué à partir des paramètres ainsi obtenus et de la relation de cohérence des signaux, individuels des signaux vocaux avant de commander la saisie d'instruction, une localisation d'une source de parole étant en plus réalisée à partir des paramètres des signaux et de la relation de cohérence, à l'aide de laquelle est déterminée la direction du lobe directionnel à former, **caractérisé en ce que** l'arrangement à microphone multiples est en outre configuré de telle sorte que les autres sources de bruit délocalisées soient réduites par des interférences destructrices à partir du contrôle de la plausibilité et de la localisation virtuelle de la source de parole.

6. Arrangement à microphones multiples selon la revendication 5, **caractérisé en ce que** l'arrangement à microphones multiples est configuré de telle sorte que pour l'analyse du signal vocal, les signaux des microphones individuels sont tout d'abord numérisés par une conversion A/N et subissent ensuite une transformation de Fourier.

7. Arrangement à microphones multiples selon la revendication 5 ou 6, **caractérisé en ce que** l'arrangement à microphones multiples est configuré de telle sorte que la détermination de la caractéristique directionnelle et le suivi du lieu virtuel du microphone s'effectuent encore pendant une élocution individuelle.

8. Arrangement à microphones multiples selon l'une des revendications 5 à 7, **caractérisé en ce que** l'arrangement à microphones multiples est configuré de telle sorte que les signaux vocaux sont également analysés pour y déceler les spécificités détectables de la parole et les paramètres qui peuvent être déterminés à partir de ceux-ci sont mémorisés de manière adaptative et une reconnaissance vocale individuelle des personnes par comparaison de modèles est possible à partir de cela.
